Europäisches Patentamt

European Patent Office

Office européen des brevets

(11) Publication number: **0 403 977**
**A2**

# EUROPEAN PATENT APPLICATION

(21) Application number: **90111345.6**

(22) Date of filing: **15.06.90**

(51) Int. Cl.⁵: **A61G 5/04**

(30) Priority: **18.06.89 IL 90645**

(43) Date of publication of application:
**27.12.90 Bulletin 90/52**

(84) Designated Contracting States:
**AT BE CH DE DK ES FR GB GR IT LI LU NL SE**

(71) Applicant: **S.A.E. AFIKIM**
**Kibbutz Afikim**
**Emek Hayarden 15148(IL)**

(72) Inventor: **Becker, Arie**
**Kibbutz Afikim, Emek Hayarden**
**IL-15 148 Isreal(IL)**

(74) Representative: **Baillie, Iain Cameron et al**
**c/o Ladas & Parry Isartorplatz 5**
**D-8000 München 2(DE)**

(54) **Vehicle for invalids.**

(57) A vehicle including a chassis; a steering and first wheeled support unit pivotably connected to the chassis at a first end thereof and a driving and second wheeled support unit pivotably connected to the chassis at a second end thereof.

EP 0 403 977 A2

## FIELD OF THE INVENTION

The present invention relates to vehicles generally and more particularly to small electric powered vehicles particularly suitable for use by handicapped persons.

## BACKGROUND OF THE INVENTION

There exist a great variety of electric powered vehicles for use by handicapped persons. These range from electrically driven wheelchairs to carts similar to golf carts which are particularly suitable for outdoor use. The vehicles presently available on the market have limited applicability and are either particularly suitable for indoor or outdoor use.

## SUMMARY OF THE INVENTION

The present invention seeks to provide a vehicle suitable for use by handicapped persons which has modes of operation particularly suitable for both indoor and outdoor use and which provides the user with an unprecedented degree of freedom of movement and safety.

There is thus provided in accordance with a preferred embodiment of the present invention a vehicle including a chassis; a steering and first wheeled support unit pivotably connected to the chassis at a first end thereof and a driving and second wheeled support unit pivotably connected to the chassis at a second end thereof.

In accordance with a preferred embodiment of the present invention, the chassis is pivotably connected to the steering and first wheeled support unit about a pivot axis which lies generally in a plane parallel to the plane of motion of the vehicle.

Further in accordance with a preferred embodiment of the invention, the vehicle is an electric vehicle and electric power storage apparatus is supported on the chassis.

Additionally in accordance with a preferred embodiment of the present invention, the steering and first wheeled support unit comprises an electric motor and gear apparatus associated therewith for effecting steering in response to an electrical command signal.

Further in accordance with a preferred embodiment of the present invention, the driving and second wheeled support unit comprises an electric motor drive.

Additionally in accordance with a preferred embodiment of the present invention, the driving and second wheeled support unit comprises shock absorber apparatus for coupling to the chassis.

In accordance with a preferred embodiment of the invention, the vehicle includes a seat mounted onto the chassis and foot rests mounted onto the driving and second wheeled support unit, whereby relative movement between the chassis and the driving and second wheeled support unit provides physical stimulation to the feet and legs of the user.

Additionally in accordance with a preferred embodiment of the invention, the foot rests are foldable about an axis generally perpendicular to the direction of movement of the vehicle.

Further in accordance with a preferred embodiment of the present invention, the vehicle also includes control apparatus including speed control apparatus having indoor and outdoor modes of operation, wherein in the indoor mode of operation, the maximum speed of operation of the vehicle is limited.

Additionally in accordance with the foregoing embodiment of the invention, the speed control apparatus is operative automatically to shift to the indoor mode of operation in response to the speed at which the vehicle is operated.

Further in accordance with an embodiment of the invention, a visible display is provided to the user of the steering condition of the vehicle.

Additionally in accordance with an embodiment of the invention, automatically operative turn signals are provided.

## BRIEF DESCRIPTION OF A PREFERRED EMBODIMENT

The present invention will be understood and appreciated more fully from the following detailed description, taken in conjunction with the drawings in which:

Fig. 1 is a symbolically exploded view side view illustration of principal portions of a vehicle constructed and operative in accordance with a preferred embodiment of the present invention;

Fig. 2 is a generalized side view illustration of the vehicle of Fig. 1;

Fig. 3 is a generalized plan view illustration of the vehicle of Figs. 1 and 2;

Fig. 4 is a generalized end view illustration of a steering and first wheeled support unit forming part of the vehicle of Figs. 1 - 3;

Fig. 5 is a generalized side view illustration of a steering and first wheeled support unit forming part of the vehicle of Figs. 1 - 3;

Fig. 6 is a generalized side view illustration of a driving and second wheeled support unit forming part of the vehicle of Figs. 1 - 3, showing the pivotable mounting of foot rests thereon; and

Fig. 7 is an electrical schematic illustration of control apparatus useful in the operation of the apparatus of Figs. 1 - 6.

DETAILED DESCRIPTION OF A PREFERRED EMBODIMENT

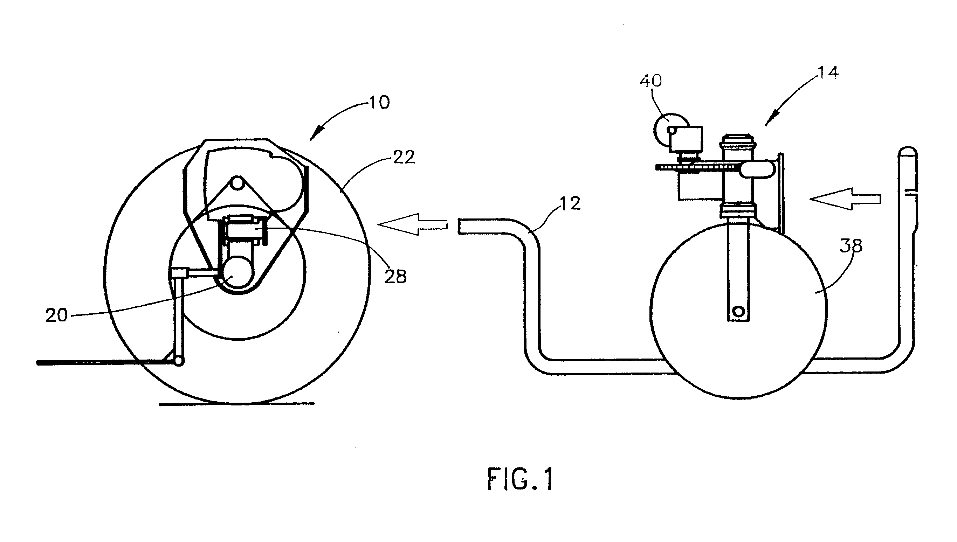

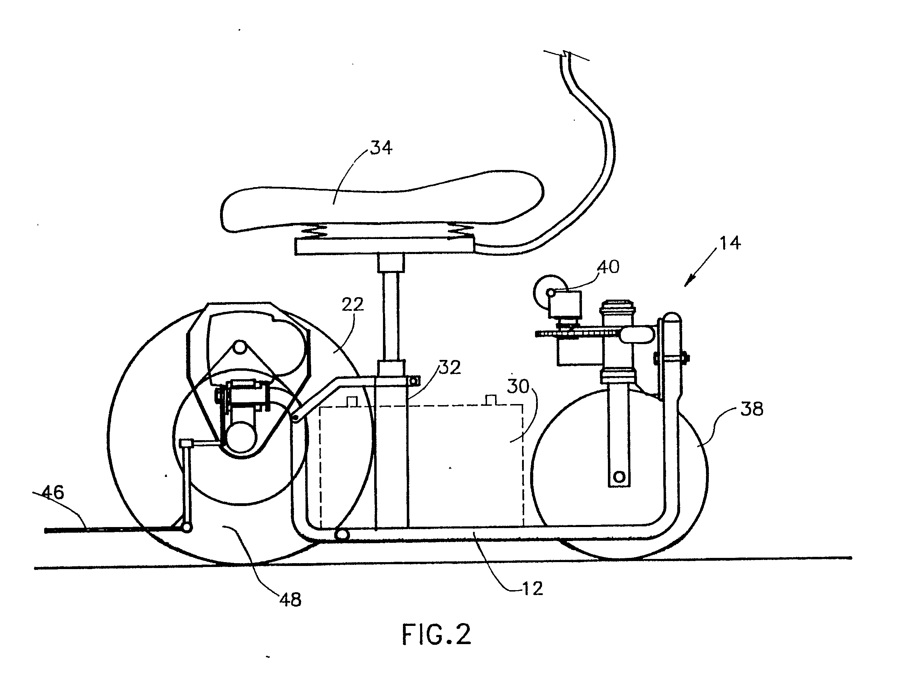

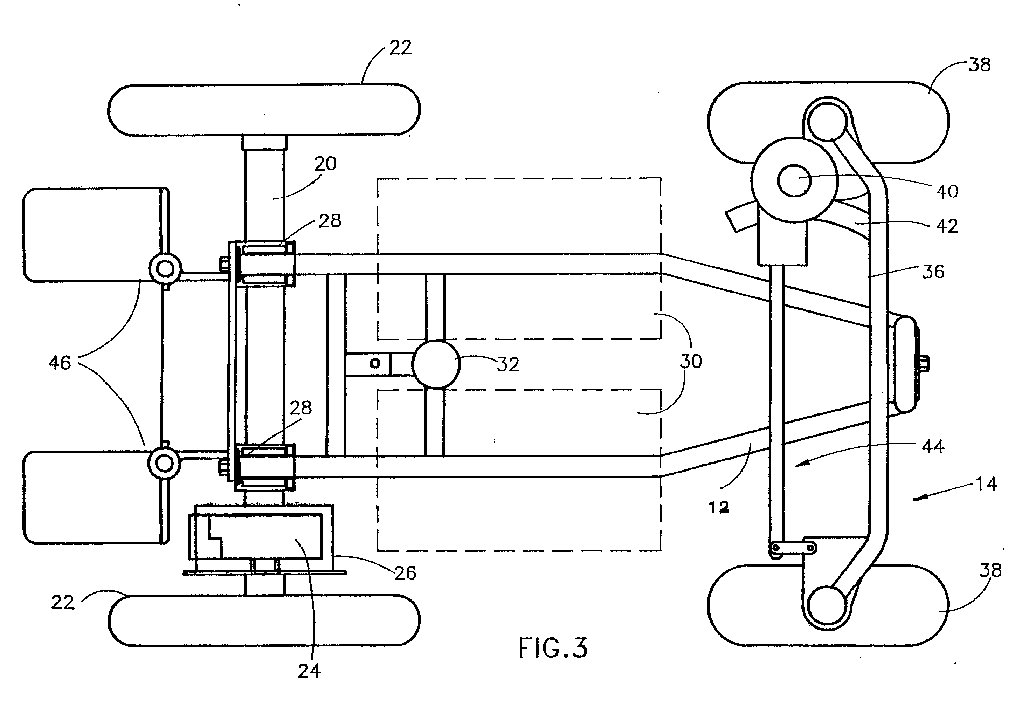

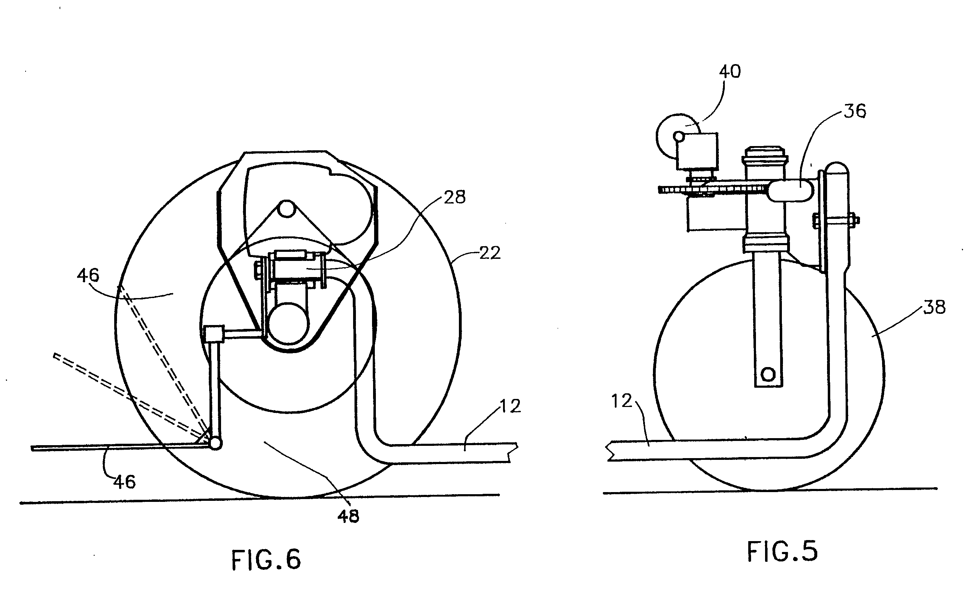

Reference is now made to Figs. 1 - 6, which illustrate a vehicle constructed and operative in accordance with a preferred embodiment of the present invention and comprising three principal elements, a forward portion 10, a chassis 12 and a rear portion 14, which are modularly assembled.

The forward portion 10 serves as the drive portion of the vehicle and preferably comprises an axle 20 having a pair of tires 22. An electric motor 24 is drivingly connected to the tires 22 via a differential 26.

Chassis 12 is mounted onto forward portion 10 via shock absorbers 28. Mounted on chassis 12 are batteries 30 for powering the vehicle and a pneumatic piston 32, for supporting a seat 34 in a shock absorbing manner.

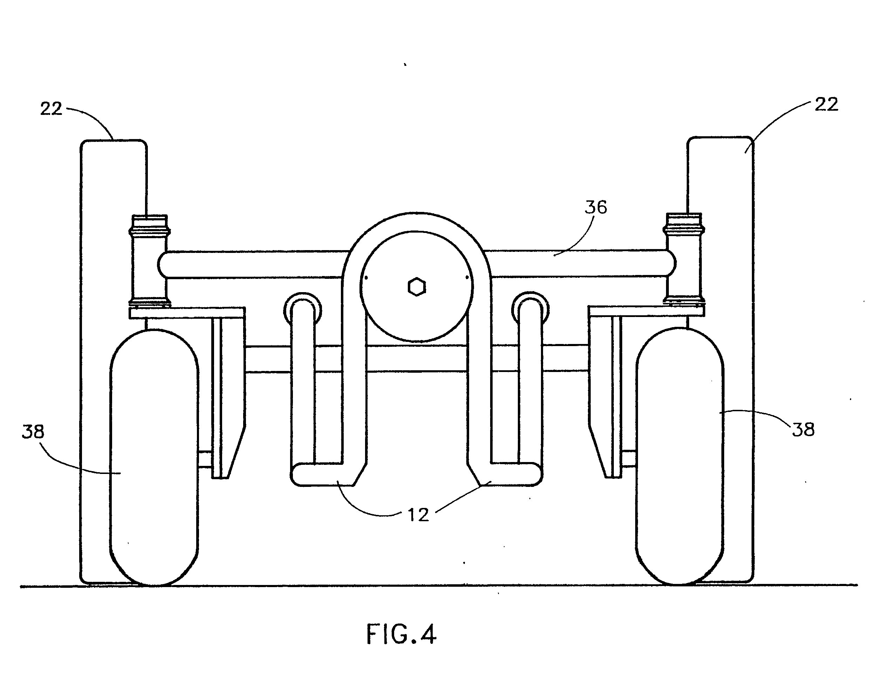

Chassis 12 is pivotably mounted on rear portion 14, as seen particularly well in Fig. 4. Rear portion 14 serves to provide steering for the vehicle and includes an axle 36 onto which are pivotably mounted tires 38, which are typically of smaller diameter than tires 22. An electric motor 40 engages a curved drive element 42, which in turn drives a steering linkage 44 for providing desired steering of the tires 38.

It is a particular feature of the present invention that the pivotable mounting of chassis 12 on rear portion 14, as illustrated in the drawings, about an axis, generally parallel to the ground plane, enables either one of tires 38 to be raised above another, so as to enable the vehicle to overcome many obstacles without varying the orientation of the chassis 12 and thus without causing undue discomfort to the rider.

Foldable foot rests 46 are mounted on the forward portion 10 and are arranged to be pivotable about an axis 48 which is parallel to axis 20. It is a particular feature of the present invention that the foot rests are mounted on the forward portion 10 and are thus not fixed with respect to the seat 34, which is somewhat movably mounted on pneumatic piston 32 which rests on chassis 12. This arrangement provides limited physical stimulation to the legs of a user, which is often beneficial.

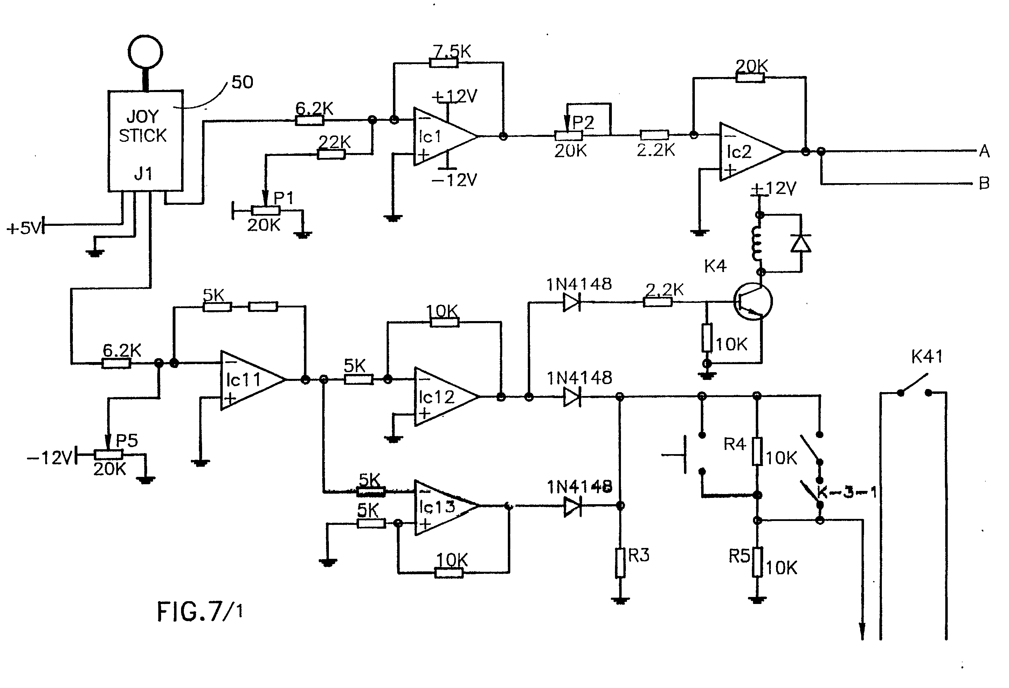

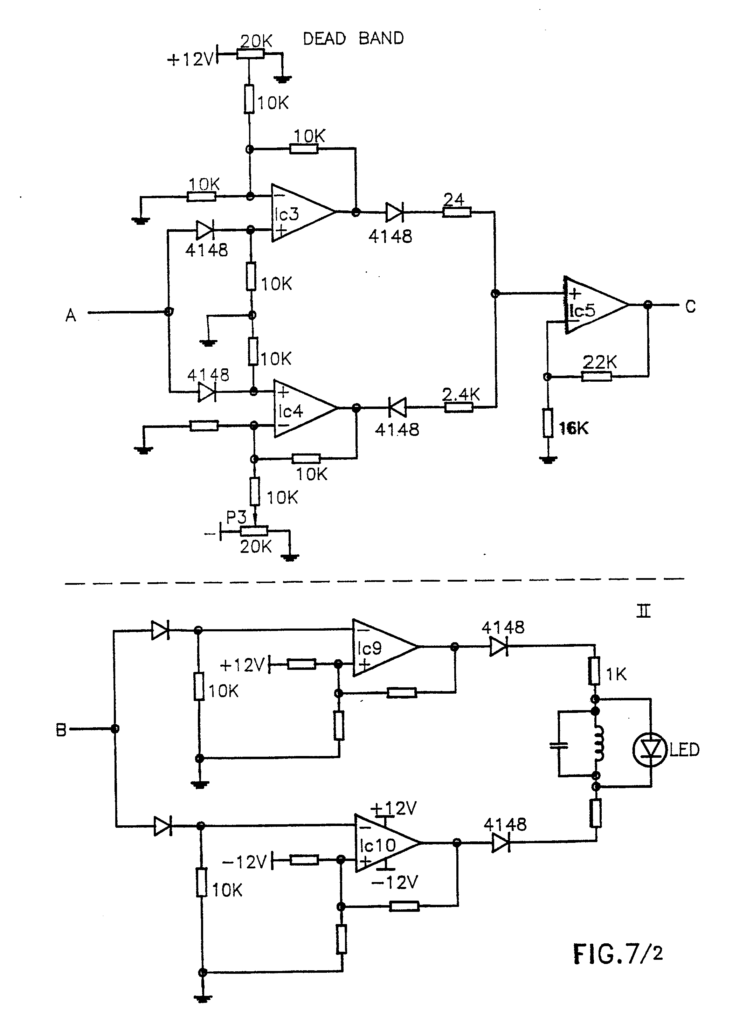

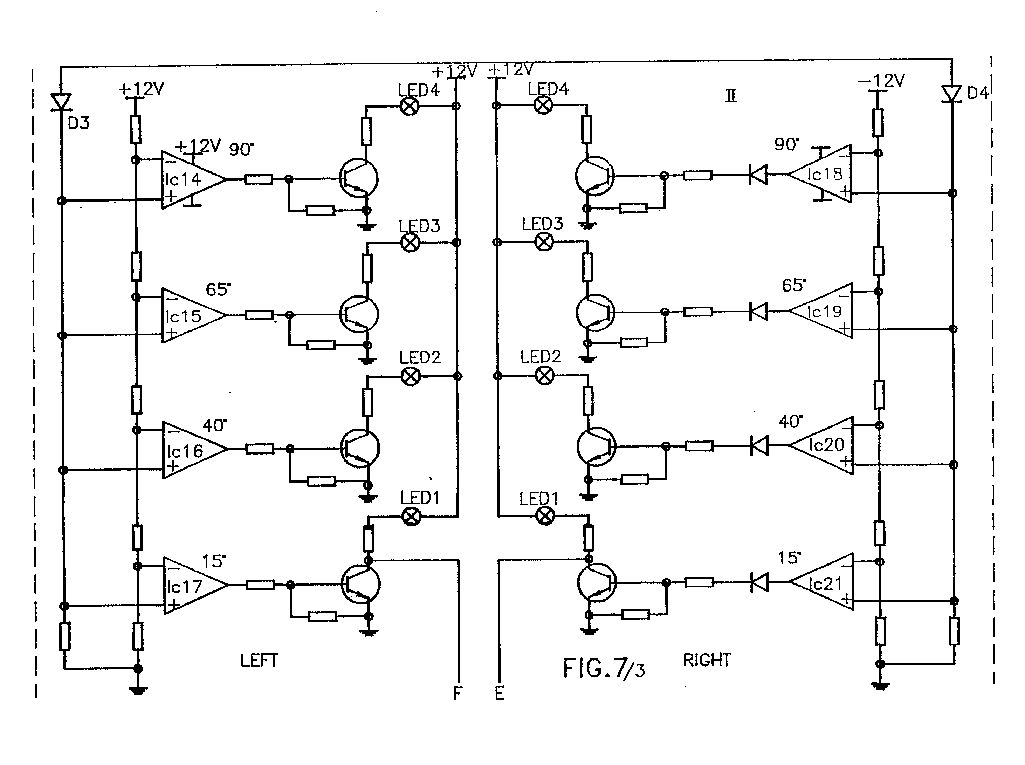

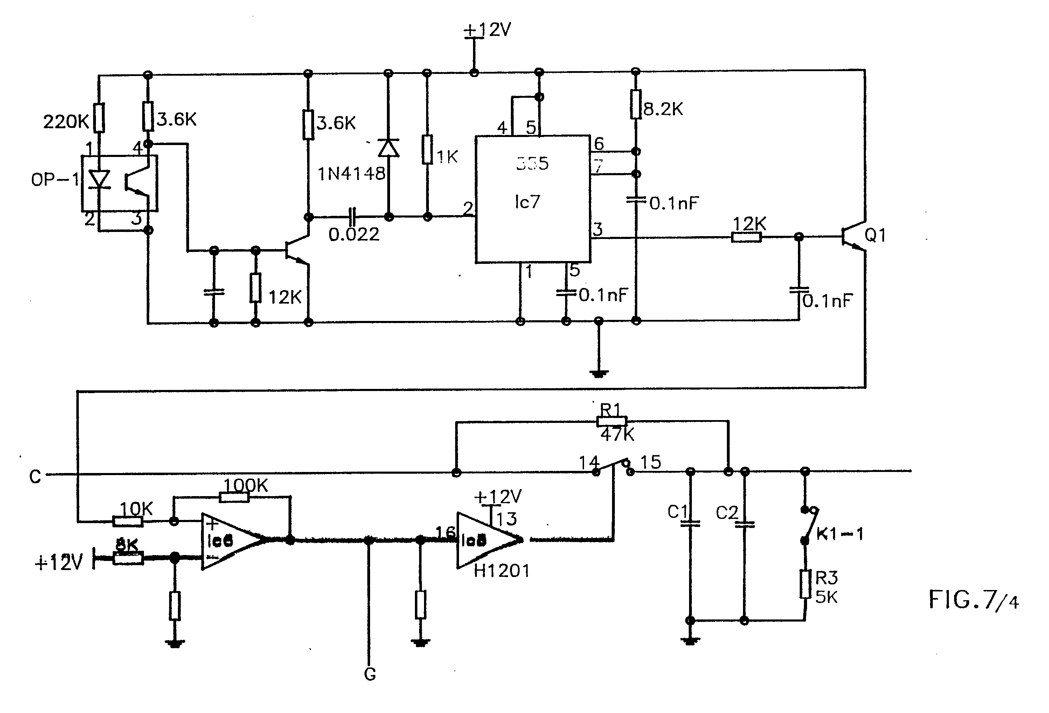

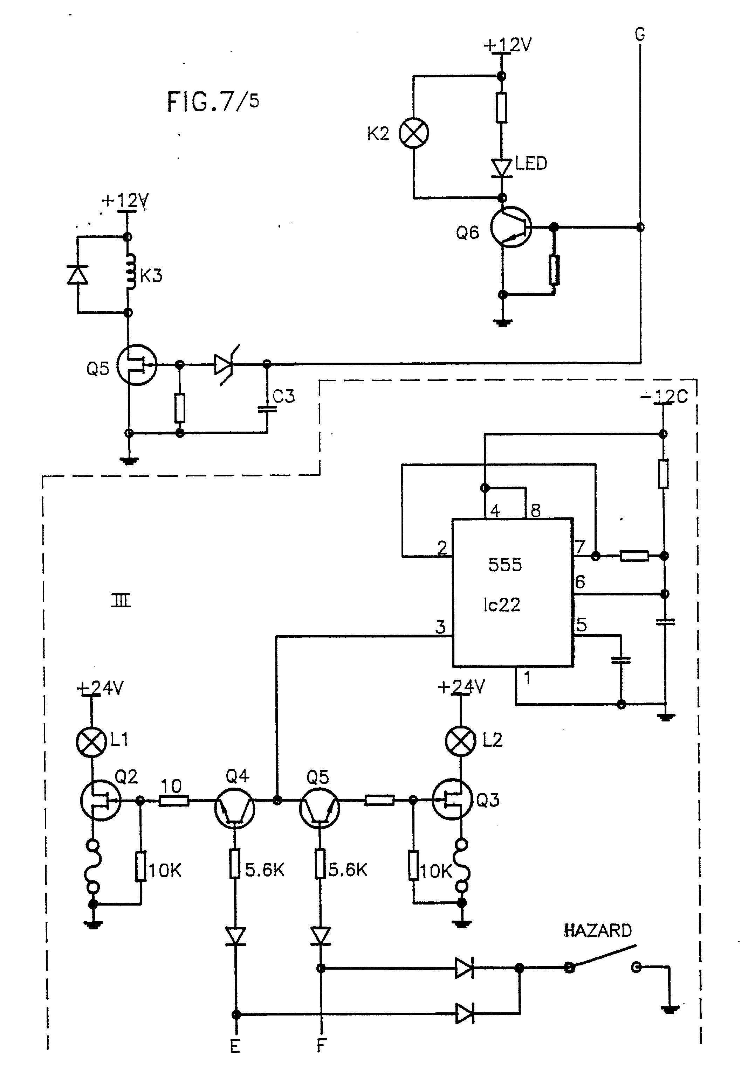

Electric motors 24 and 40 are operated by means of control circuitry which will now be described with reference to Fig. 7. The basic operator control is a joy-stick 50, which may be of any suitable conventional construction, which provides both direction and speed control.

The control circuitry of Fig. 7 includes three principal subsystems. A first subsystem provides two different modes of operation, an OUTDOOR mode and an INDOOR mode. In the OUTDOOR mode of operation, speeds of up to 15 km/h may be realized; while in the INDOOR mode, the maximum speed is about 5 km/h.

The first subsystem, indicated by 1 in Fig. 7, includes circuitry which senses the position of the joy-stick and measures the velocity of the vehicle. So long as the vehicle operates at speeds less than typically 5 km/h, the vehicle remains in the INDOOR mode. Should the operator wish to travel faster, he positions the joy-stick at an extreme high speed position for at least a given time, typically 5 seconds. Thereafter, an audio/visual alarm is given and the vehicle shifts into the OUTDOOR mode, permitting higher speeds to be realized. Once lower speeds are maintained for at least a given time, such as 20 seconds, the vehicle automatically shifts back to the INDOOR mode.

A second subsystem, indicated by II in Fig. 7, provides a visual indication of the steering status of the vehicle. An output voltage of the joy stick indicating the desired extent of sideways motion operates a plurality of light sources, typically LEDs marked LED 1 - LED 8, which light up to indicate the angular extent and direction at which the vehicle is being steered.

A third subsystem, indicated by III in Fig. 7, also receives an input from the angle sensor and provides a turn signal indication of the direction of steering.

The schematic illustration of Fig. 7 is believed to be easily understood by persons of ordinary skill in the art, it being noted that all integrated circuits with the exception of IC 7, SC 8 and IC 22 are preferably LM 324 chips, while SC 7 and IC 22 are preferably embodied in LM 555 chips and IC 8 is preferably embodied in an HI 201 chip.

It will be appreciated by persons skilled in the art that the present invention is not limited by what has been particularly shown and described hereinabove. Rather the scope of the present invention is defined only by the claims which follow:

**Claims**

1. A vehicle comprising:
a chassis;
a steering and first wheeled support unit pivotably connected to the chassis at a first end thereof; and
a driving and second wheeled support unit pivotably connected to the chassis at a second end thereof.

2. A vehicle according to claim 1 and wherein said chassis is pivotably connected to the steering and first wheeled support unit about a pivot axis which lies generally in a plane parallel to the plane of motion of the vehicle.

3. A vehicle according to claim 2 and comprising an electric drive motor mounted on said driving and second wheeled support unit.

4. A vehicle according to claim 3 and also comprising batteries mounted on said chassis.

5. A vehicle according to claim 1 and wherein said steering and first wheeled support unit comprises an electric motor and gear apparatus associated therewith for effecting steering in response to an electrical command signal.

6. A vehicle according to claim 1 and wherein said driving and second wheeled support unit comprises shock absorber means for coupling to the chassis.

7. A vehicle according to claim 1 and also comprising a seat mounted onto the chassis and foot rests mounted onto the driving and second wheeled support unit, whereby relative movement between the chassis and the driving and second wheeled support unit provides physical stimulation to the feet and legs of the user.

8. A vehicle according to claim 7 and wherein said foot rests are foldable about an axis generally perpendicular to the direction of movement of the vehicle.

9. A vehicle according to claim 1 and also comprising control means including speed control means having indoor and outdoor modes of operation, wherein in the indoor mode of operation, the maximum speed of operation of the vehicle is limited.

10. A vehicle according to claim 9 and wherein said speed control means is operative automatically to shift to the indoor mode of operation in response to the speed at which the vehicle is operated.

11. A vehicle according to claim 1 and also comprising means for providing a visible display of the steering condition of the vehicle.

12. A vehicle according to claim 1 and also comprising automatically operative joy stick actuated turn signals.

FIG.1

EP 0 403 977 A2

FIG.2

EP 0 403 977 A2

FIG.3

FIG.4

EP 0 403 977 A2

FIG.7/1

EP 0 403 977 A2

FIG.7/2

FIG. 7/3

LEFT

RIGHT

F  E

EP 0 403 977 A2

FIG.7/4

EP 0 403 977 A2

FIG.7/5